# EUROPEAN PATENT SPECIFICATION

(11) **EP 3 953 573 B1**
(45) Date of publication and mention of the grant of the patent: **07.06.2023**
(21) Application number: 20723929.4
(22) Date of filing: 09.04.2020
(51) Int. Cl.: F01C 1/077, F01C 21/06, F02B 47/02, F02B 53/00

(54) **IMPROVED ROTATING COMBUSTION MACHINE**
VERBESSERTE ROTIERENDE VERBRENNUNGSMASCHINE
MACHINE À COMBUSTION ROTATIVE AMÉLIORÉE

(30) Priority: 10.04.2019 IT 201900005532
(43) Date of publication of application: 16.02.2022
(73) Proprietor: Cadore, Antonio, 35036 Montegrotto (IT)
(72) Inventor: Cadore, Antonio, 35036 Montegrotto (IT)
(74) Representative: Contadin, Giorgio
(86) International application number: PCT/IB2020/053385
(87) International publication number: WO 2020/208567

(56) References cited:
- EP-A1- 2 233 691
- WO-A1-2010/131225
- DE-A1-102007 008 565
- GB-A- 347 803
- GB-A- 1 155 429
- GB-A- 191 128 828
- JP-A- S60 184 923
- US-A- 1 329 625
- US-A- 1 644 564
- US-A- 1 676 211
- US-A- 1 701 534
- US-A- 1 729 242
- US-A- 1 778 182
- US-A- 3 990 405
- US-A- 5 832 880
- US-A1- 2014 130 770
- US-A1- 2017 022 892
- US-B1- 9 194 287

## Description

The present invention generically relates to an improved rotating internal combustion machine, of the orbiting piston type, such as can be seen for example in US-A-1329625, typically adapted to assume the configuration of a driving machine - such as a hydraulic turbine or, for example, a four or two-stroke combustion engine - which, as known, in the field of fluid machines, provides the output mechanical energy to the shaft of the machine at the expense of the energy of the processed operating fluid (air-fuel mixture).

As known, reciprocating internal combustion engines are quite common driving machines which allow converting the chemical energy of an air-fuel mixture (such as gasoline, diesel, liquid propane gas (LPG) or methane) into mechanical work made available to the driving shaft and, more generally, to the transmission system; they are used, in particular, for the propulsion of vehicles, such as, for example, cars for civil use, racing cars, motorcycles, trains, mopeds, agricultural machinery or gardening machinery (lawnmowers, to name but one).

It is also known that the energy efficiency of these types of engine depends on both thermodynamic loss factors and on kinematic and dynamic loss factors; the thermodynamic factors are related to the combustion conditions and to the heat losses, according to the type of thermodynamic cycle they perform.

On the other hand, the kinematic and dynamic loss factors are related to the typical configuration of this type of engine, distinguished by pistons sliding within cylinders and adapted to feed the driving shaft into rotation through a conventional rod-and-crank kinematic mechanism.

Furthermore, the timing devices of such reciprocating engines - e.g. comprising camshafts, which control the intake and exhaust poppet valves - generate mechanical losses, which subtract a share of the energy absorbed by the engine for its operation, thereby reducing the useful energy made available by the engine to the user.

Similarly, operating machines, such as pumps, fans, and compressors, have the same structure as the reciprocating piston machines but the mechanical losses can be directly attributed to the dynamic efficiency of such configuration in these cases. A revolutionary driving/operating machine is also known from the technical teachings suggested by Italian Patent no. 1263709, which is operationally of the rotating type and is adapted to be configured as a thermodynamic cycle engine, of both the spark-ignition type (also commonly known as combustion engine) and of the internal or external combustion compression-ignition type, as a pump, fan or compressor.

Such a machine has a stator having a toroidal chamber, which surrounds at least two coaxial and integral rotors, each with respective pistons sliding in such a toroidal chamber.

The rotors are connected, through a mechanical transmission, to a primary shaft, which acts as a driving shaft or as a driven shaft, according to whether the machine is in operating machine configuration or in driving machine configuration, respectively.

This mechanical transmission has two elliptical profile toothed wheels, each of which is connected to one of the rotors; the toothed wheels each engage an additional toothed wheel belonging to a pair of toothed wheels also with an elliptical profile, which are integrally keyed to the aforementioned primary shaft so that their major semi-axles are substantially perpendicular.

In this manner, the rotors feed the pistons according to a reciprocating pulsating motion which causes them to move towards and away during their rotation motion and to follow each other in the toroidal chamber.

The volume comprised between successive pistons which rotate following each other in the toroidal chamber of the stator varies continuously between a minimum and a maximum value, similarly to the volume delimited in the cylinder by the piston during the operation of a reciprocating machine.

The most obvious advantages obtained by such a driving/rotating machine with respect to the reciprocating machines of the prior art known at the time are determined by its dynamic balancing.

Indeed, the moving masses rotate about longitudinal axes with respect to which the masses themselves are arranged in a substantially symmetrical manner. Although appreciated, a machine of this type can be improved, because elliptical profile toothed wheels are more complex and of more complicated manufacture than circular section wheels, precisely because of their axial dissymmetry.

Furthermore, the transmission, by providing the engagement of the corresponding toothed wheels, imposes the offset of the primary shaft with respect to the rotation axis of the rotors, to the detriment of the compactness of the machine.

Such drawbacks are solved by an improved rotating type machine, as described in Italian patent no. 1378900 filed by the applicant of the present invention, in particular provided with so-called orbiting pistons; indeed, such a machine is successfully proposed to be as dynamically balanced at least as the rotating machines of the same type known at the time, while limiting the overall dimensions with respect to them.

Furthermore, the rotating machine referred to in Italian Patent no. 1378900 can be made with structurally simpler and less complex mechanical elements than those used in driving/operating machinery of the same type as the relevant prior art.

Additionally, the orbiting piston rotating machine described and claimed in Italian Patent no. 1378900 has further significant disadvantages compared with respect to the prior art, which can be summarized as follows:
- reduction of the power (in terms of horsepower or kilowatts) needed to supply and put the machine into operation, in particular the pistons which act on the operating fluid (combustion fluid - typically air - or a combustion supporter-fuel mixture);
- elimination of the timing system, typical of reciprocating machines;
- in driving machine configuration, the processing (burning) of the operating fluid by means of physically and totally distinct strokes, which are mutually independent and separate, by virtue of the construction concept of the stator and rotor which supports the orbiting pistons sliding inside the substantially in toroid-shaped annular inner chamber: substantially, each well-defined sector of the annular inner chamber in the stator is the seat of a single, distinct and precise stroke of a two or four-stroke engine, unlike in the common and traditional reciprocating engines;
- in driving machine configuration, at least two, preferably four, ignitions (or sparks) at each revolution of the rotors in the stator (or at each revolution of the primary or driving shaft), as opposed to traditional engines in which four or eight pneumatic actuators (and therefore eight cylinders with their eight pistons) are respectively required to achieve this effect;
- continuous, constant and consecutive thrust of the orbiting pistons on the operating fluid;
- development of a very high mechanical torque;
- ease of operation, with an easier suction and exhaust strokes;
- timing and real-time dissipation of the heat produced by the compression of the operating fluid and, in driving machine configuration, by combustion by the pistons themselves while they are in orbital motion inside the toroidal annular chamber.

Notwithstanding all these benefits and its operational efficiency, the orbiting piston rotating machine under Italian Patent no. 1378900, when configured as a driving machine, displays, as the main drawback, the fact that the torus-shaped sector of the annular inner chamber in which the expansion of the operating fluid following ignition takes place - and which, from a thermal point of view, is inevitably more stressed than the other sectors, with consequent expansions which differ from the remaining sectors of such annular inner chamber obtained in the stator - is not adequately cooled.

A further drawback of the prior art described here, which is a direct consequence of the drawback just highlighted, derives from the fact that the heat produced by the ignition of the operating fluid and its subsequent combustion in the expansion stroke is substantially and negatively wasted, on the one hand, because it is intended to be dispersed into the environment and, on the other hand, absorbed by the engine, which thus overheats.

Therefore, starting from the awareness of the above-mentioned drawbacks, even if they always exist even in the most evolved prior art, the present invention intends to solve them.

In particular, it is main purpose of the invention to provide an improved rotating combustion machine, of the orbiting piston type, which effectively allows cooling the toroidal sector of the annular inner chamber of the stator in which the expansion of the operating fluid takes place.

In other words, it is main purpose of the invention to design an improved rotating combustion machine which is provided with a system for cooling the temperatures which develop during the expansion stroke of the operating fluid in the torus-shaped sector of the annular inner chamber of the stator.

Within such a purpose, it is task of the present invention to create an improved rotating combustion machine which, with respect to the known, technically most advanced rotating machines (described, in particular, in Italian Patent no. 1378900) shows a greater thermal balance in the disposal of the heat which is generated by the combustion of the operating fluid, mechanically implemented by the orbiting pistons, while they slide in rotation within the toroid-shaped annular inner chamber obtained in the stator.

It is another task of the invention to indicate an improved rotating combustion machine which allows to decrease the temperature to achieve the expansion of the operating fluid with respect to the closest prior art - constituted, as mentioned several times, by the Italian Patent no. 1378900 -.

It is a further purpose of the current invention to make an improved rotating combustion machine which allows to recovery the heat produced during the combustion of the operating fluid in the expansion stroke, following its ignition, in the toroidal sector of the annular inner chamber of the stator, thus avoiding the inconvenient dispersion thereof which can be currently found in the equivalent machines of the known art.

It is a last but not least purpose of the present invention to make available an improved rotating combustion machine which allows to reduce the always undesired overheating of its components compared to similar machines of the prior art.

Said purposes are achieved by means of an improved rotating combustion machine according to the appended claim 1, to which reference should be made for the sake of brevity of presentation.

Further technical features of detail of the improved rotating combustion machine of the invention are contained in the corresponding dependent claims.

The aforesaid claims, hereinafter specifically and concretely defined, are an integral part of the present description.

Advantageously, the improved rotating combustion machine of the current invention allows to effectively cool the toroidal sector of the annular inner chamber of the stator directly concerned by the expansion of the operating fluid.

This is conveniently due to the fact that the improved rotating combustion machine of the invention comprises an injection circuit, cooperating with the stator to convey a pressurized cooling fluid in nebulized or sprayed form into the expansion sector of the inner combustion chamber, the cooling fluid being contained in a service tank belonging to the injection circuit itself, as soon as the operating fluid has been combusted by the ignition means and during the rotation of the mechanical transmission means and the one or more rotors about the linear axis defined by the mechanical transmission means.

Even more advantageously, the improved rotating combustion machine of the invention allows to lower, compared to the equivalent prior art, the value of the temperatures developed during the expansion stroke of the operating fluid in the torus-shaped sector of the annular inner chamber of the stator, immediately after its combustion by the ignition means, to the advantage of the duration of the structural integrity of the machine parts.

Equally advantageously, the improved rotating combustion machine of the current invention achieves a thermal balance in the disposal of the heat produced by the combustion of the operating fluid determined by the orbiting pistons while rotating in the toroidal annular inner chamber of the stator better than that which can be achieved with equivalent machines of known type, e.g. the machine described in Italian Patent no. 1378900.

Again advantageously, the improved rotating combustion machine of the present invention allows to recover the heat produced by the combustion of the operating fluid during the expansion stroke, consequent to its ignition, in the respective toroidal sector of the annular inner chamber of the stator, thus avoiding its disadvantageous dispersion into the environment and its absorption by the machine members, currently found in similar known machines; it follows, quite advantageously, that the operation of the cooling fluid injection circuit, provided in the machine of the invention, determines a greater energy contribution with a decrease in "specific consumption", meaning as the ratio between energy supplied by the fuel and energy obtained by the expansion.

Substantially, the thermal energy produced in the expansion chamber of the rotating machine of the invention, otherwise destined to the exhaust, wasted or absorbed by the members of the machine itself, is therefore transformed by the nebulized cooling fluid "shot" directly into the expansion sector of the combustion chamber into mechanical energy which is conveniently added to the mechanical energy obtained from the conversion of the energy of the fuel, thus increasing the mechanical energy supplied to the machine shaft, the number and size of the orbiting pistons being equal.

Moreover, with the same power supplied to the shaft of the improved rotating combustion machine of the invention, it is possible to find a greater quantity of water in the exhaust gases and a consequent reduction in carbon dioxide compared to traditional combustion machines comparable thereto, with a further greater benefit for the environment compared to the latter.

The aforesaid purposes and advantages will become more apparent from the description that follows, related to a preferred embodiment of the improved rotating internal combustion machine of the invention, given by way of indicative and illustrative, but non-limiting, example, with the help of the appended drawings, in which:
- figure 1 is a diagrammatic, simplified and partially cross-section side view of the improved rotating internal combustion machine of the invention;
- figure 2 is an exploded, partial assonometric view of the rotating machine in figure 1;
- figures 3, 4 and 5 are three distinct, simplified, diagrammatic and explanatory frontal views of the rotor operating sequence of the improved rotating combustion machine of the invention;
- figures 3a, 4a and 5a are three distinct, simplified, diagrammatic and explanatory frontal views of the sequence of operation of the members of the mechanical transmission means of the improved rotating combustion engine of the invention, each one of which shows the position assumed by the mechanical transmission means when the rotor assumes the corresponding position shown in the respective front view in figures 3, 4 and 5.

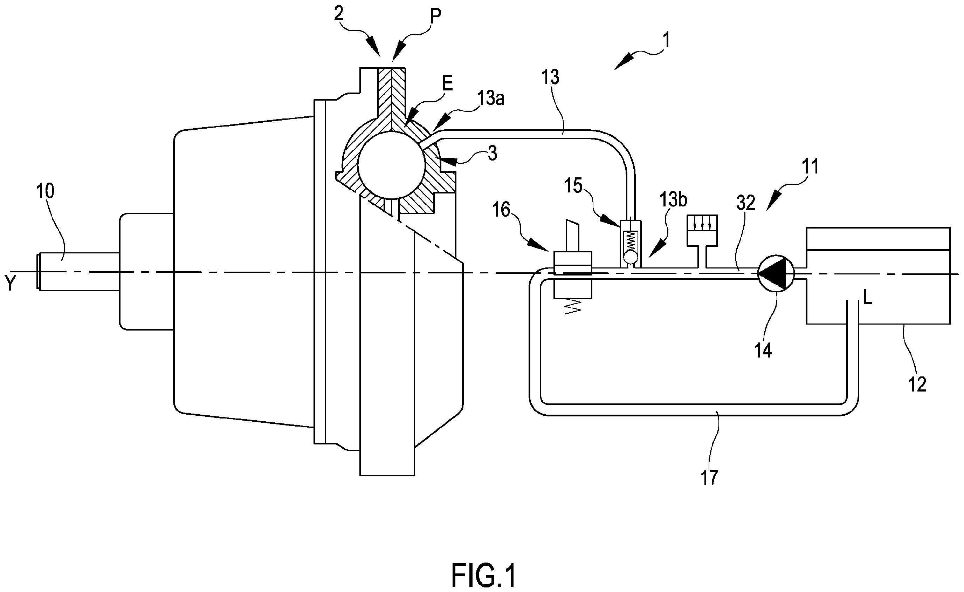

The improved rotating combustion machine of the invention, typically a four-stroke, spark-ignition engine, operating according to an Otto cycle, is diagrammatically shown in figure 1, where it is indicated by reference numeral 1 as a whole.

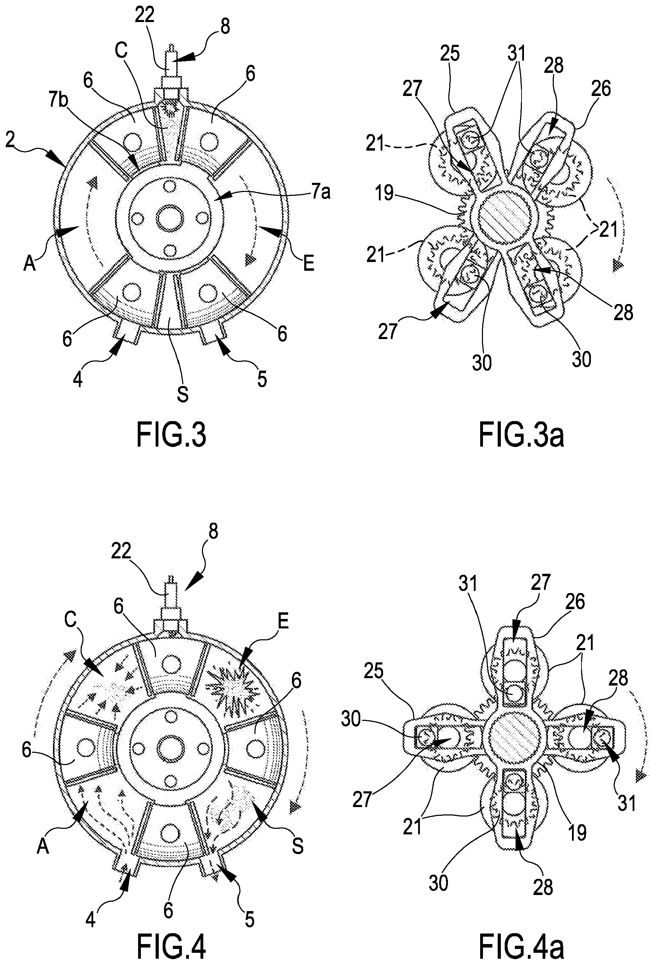

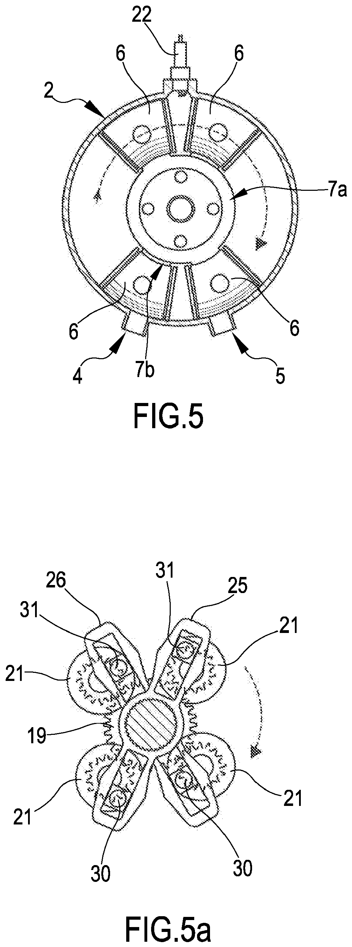

As it can be seen, such a rotating combustion machine 1 comprises, according to the technical teachings suggested by Italian Patent no 1378900 here fully quoted again for reference:
- a stator 2, in which an inner combustion chamber 3 is defined, having an annular or substantially toroidal profile, a suction port 4 for introducing an operating fluid, such as a supporter of combustion-fuel mixture into the inner chamber itself, and a discharge port 5 for letting the operating fluid out from aforesaid inner combustion chamber 3;
- a plurality of substantially torus-shaped orbiting pistons 6, connected in this case to two rotors 7a, 7b coaxial to the inner chamber 3 and made to slide in rotation in the inner chamber 3 itself so that, as can be inferred from the combined arrangement of figures 3, 4, and 5, a variable pair of adjacent orbiting pistons 6 dynamically and consecutively divide the inner chamber 3 into a suction sector A of the operating fluid, a compression sector C of the operating fluid, an expansion sector E of the burnt gases and a discharge sector S of the burnt gases outside through the discharge port 5 (sectors in which the respective stroke of an Otto cycle is performed);
- ignition means, indicated as a whole by reference numeral 8, for the combustion of the operating fluid, interposed between the compression sector C and the expansion sector E of the inner combustion chamber 3, with which they communicate;
- mechanical transmission means, indicated as a whole by reference numeral 9, connected to the rotors 7a, 7b and to a primary shaft 10, to which they transmit the motion, adapted to be placed by the operating fluid into rotation about a linear axis Y, so that the orbiting pistons 6 slide in rotation within the inner chamber 3, one following the other, simultaneously with the rotation of the mechanical transmission means 9 and of the rotors 7a , 7b about the linear axis Y.

According to the invention, the improved rotating combustion machine 1 comprises an injection circuit, indicated as a whole by reference numeral 11, cooperating with the stator 2 to convey a pressurized cooling fluid L (typically water) in nebulized or sprayed form into the expansion sector E of the inner combustion chamber 3, the cooling fluid being contained in a service tank 12 belonging to the injection circuit 11, once the operating fluid has been combusted by the ignition means 8 and during the rotation of the mechanical transmission means 9 and of the rotors 7a, 7b about the linear axis Y.

In particular, by way of example only, the injection circuit 11 comprises a main delivery pipe 13 connected to the upper part P of the expansion sector E of the internal combustion chamber 3 defined within the stator 2.

Additionally, the injection circuit 11 appropriately further comprises pumping means, such as at least a volumetric pump 14, adapted to draw the cooling fluid L from the service tank 12 and introduce it under pressure into the expansion sector E of the internal combustion chamber 3.

Preferably but not necessarily, the injection circuit 11 includes a spray nozzle, not shown in the accompanying figures, facing the expansion sector E of the internal combustion chamber 3 and adapted to nebulize or spray the cooling fluid L.

More in detail, the aforesaid spray nozzle is arranged at the first end 13a of the main delivery pipe 13, the one directly facing (and communicating with, or facing) the expansion sector E of the internal combustion chamber 3.

Advantageously, the injection circuit 11 further comprises a non-return valve 15 arranged downstream of the volumetric pump 14 and upstream of the first end 13a of the main delivery pipe 13.

By way of preferred and non-binding example, the non-return valve 15 is arranged at a second end 13b of the main flow pipe 13, opposite to the first end 13a defined above.

Preferably but not exclusively, the injection circuit 11 of the cooling fluid L further comprises a compensator 16 arranged downstream of the volumetric pump 14, in line with this in the initial duct 32 of the injection circuit 11.

Preferably but not exclusively, the injection circuit 11 further comprises an auxiliary return pipe 17 provided with valve means, such as a solenoid valve, which normally take an open position when the cooling fluid L is introduced under pressure into the expansion sector E of the inner combustion chamber 3 of the volumetric pump 14 and a closed position when the cooling fluid L must remain in the service tank 12 for any reason.

According to the embodiment of the invention described herein, the mechanical transmission means 9 are of the type indicated in the Italian Patent no. 1378900, comprising:
- at least one fixed solar toothed wheel 19 (which acts as a ring of a gear), integral with the stator 2 and, in particular, coaxial with the inner combustion chamber 3;
- a planetary support rotor 20 integral with the primary shaft 10 and adapted to be put into rotation about the linear axis Y coaxially with the solar toothed wheel 19;
- a plurality of satellite toothed wheels 21 (which each act as pinions of a gear and which in this preferred case are four in number because they ensure the maximum balancing of the structural assembly); the satellite toothed wheels 21 are pivoted on the supporting planetary rotor 20 and engage in the solar toothed wheel 19 from two by two opposite and symmetrically arranged parts with respect to the linear axis Y;
- two interconnection hubs 23, 24, each associated and coaxial with one of the respective rotors 7a, 7b and coupled with one or more transverse connecting levers 25, 26, coaxial with the rotors 7a, 7b and interposed between the interconnection hubs 23, 24 and the satellite toothed wheels 21, each of such transverse levers 25, 26 having a pair of slotted radial cams 27, 28 adapted to slidably receive eccentric means, indicated as a whole by reference numeral 29, which mutually connect the interconnection hubs 23, 24 and the satellite toothed wheels 21.

In practice, the transverse levers 25, 26 develop in a transverse direction to the linear axis of rotation defined by the primary shaft 10 of the mechanical transmission means 9 and are arranged axially close to each other on planes which are mutually distinct but parallel, thus defining longitudinal directions of development which are mutually offset according to a cross-like configuration.

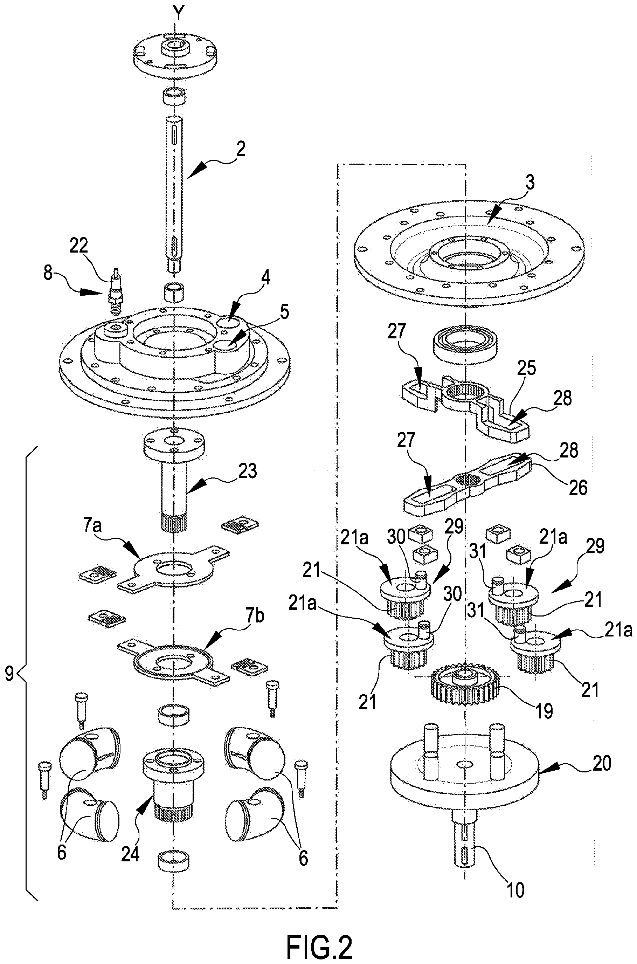

Figure 2 shows that, preferably, the eccentric means 29 project longitudinally and orthogonally from a side face 21a of each of the satellite toothed wheels 21 on the primitive diameter of which they are positioned, at a point different from the center of the satellite toothed wheels 21; this design concept gives rise to the eccentricity with which the interconnection hubs 23, 24 are connected to the satellite toothed wheels 21.

Furthermore, the eccentric means 29 comprise, preferably but not exclusively, two projecting pins 30, 31 engaged in their respective slotted radial cams 27, 28 within which the projecting pins 30, 31 themselves slide during the rotation of the interconnecting hubs 23, 24 and the rotors 7a, 7b about the linear axis Y, as can be seen from the combined arrangement of figures 3a, 4a and 5a.

Based on the above, the sliding of the orbiting pistons 6 in the inner combustion chamber 3 takes place simultaneously to the rotation of the rotors 7a, 7b, of the supporting planetary rotor 20 and the interconnection hubs 23, 24 about the linear axis Y and the rotation of the satellite toothed wheels 21 about the fixed solar toothed wheel 19 and the sliding of the eccentric means 29 in the slotted radial cams 27, 28.

The ignition means 8 preferably comprise a spark plug 22 of the traditional type, clearly visible in figures 2, 3, 4 and 5.

It is worth noting that in further embodiments of the improved rotating combustion engine of the invention, not accompanied by reference drawings, the mechanical transmission means may comprise a number of interconnecting hubs and transverse connecting levers different from the one described above and shown in the appended figures; such a number varies according to the number of rotors provided in the rotating combustion engine of the current invention.

Upon implementation, changes could be made to the improved rotating combustion engine of the current invention, e.g. consisting of a different number of rotors as that previously described and shown in the appended figures, because this number may vary according to the construction choices starting from one.

Additionally, other variants of implementation may be made to the improved rotating combustion engine claimed herein, which are not accompanied by explanatory reference figures, in which the mechanical transmission means have a different construction concept as that described above and found in the following figures, which does not affect the advantage brought by the present invention.

Finally, it is apparent that many other variants may be made to the improved rotating combustion machine, without departing from the scope of the appended claim.

## Claims

1. A rotating combustion machine (1) comprising:
- a stator (2) in which an inner combustion chamber (3) is defined, having an annular or substantially toroidal profile and presenting at least one suction port (4) for introducing an operating fluid into said inner chamber (3) and at least one discharge port (5) for exiting said operating fluid from said inner chamber (3);
- a plurality of orbiting pistons (6), connected with one or more rotors (7a, 7b) coaxial to said inner chamber (3) and made sliding in rotation in said inner chamber (3) in such a way that a variable pair of adjacent orbiting pistons (6) dynamically and consecutively divides said inner chamber (3) into a suction sector (A) of said operating fluid, a compression sector (C) of said operating fluid, an expansion sector (E) of the burnt gases and a discharge sector (S) of said burnt gases;
- ignition means (8) of the combustion of said operating fluid, interposed between said compression sector (C) and said expansion sector (E) of said inner combustion chamber (3);
- mechanical transmission means (9), connected with said rotors (7a, 7b) and with a primary shaft (10) to which they transmit the motion, suitable to be placed by said operating fluid in rotation around a linear axis (Y), in such a way that said orbiting pistons (6) slide in rotation inside said inner chamber (3), one following the other, simultaneously with the rotation of said mechanical transmission means (9) and of said rotors (7a , 7b) around said linear axis (Y),
**characterized in that** it comprises an injection circuit (11), cooperating with said stator (2) in such a way as to convey inside said expansion sector (E) of said inner combustion chamber (3) a cooling fluid (L) in atomized or powder form, contained in a service tank (12) belonging to said injection circuit (11), once said combustion of said operating fluid by said ignition means (8) has been occurred and during said rotation of said mechanical transmission means (9) and of said rotors (7a, 7b) around said linear axis (Y).

2. Machine (1) according to claim 1), **characterized in that** said injection circuit (11) comprises a main delivery pipe (13) connected with the upper part (P) of said expansion sector (E) of said inner combustion chamber (3).

3. Machine (1) according to claim 1) or 2), **characterized in that** said injection circuit (11) comprises at least one volumetric pump (14) suitable to draw said cooling fluid (L) from said service tank (12) and inject it under pressure into said expansion sector (E) of said inner combustion chamber (3).

4. Machine (1) according to any of the previous claims, **characterized in that** said injection circuit (11) includes a spray nozzle facing said expansion sector (E) of said inner combustion chamber (3) and suitable to nebulize or spray said cooling fluid (L).

5. Machine (1) according to claim 4) when dependent on claim 2), **characterized in that** said spraying nozzle is arranged at a first end (13a) of said main delivery pipe (13), that one facing towards said expansion sector (E) of said inner combustion chamber (3).

6. Machine (1) according to claim 3), **characterized in that** said injection circuit (11) includes a non-return valve (15) arranged downstream said volumetric pump (14).

7. Machine (1) according claim 6) when claim 3) depends on claim 2), **characterized in that** said non-return valve (15) is arranged at a second end (13b) of said main delivery pipe (13), opposite to a first end (13a) facing said expansion sector (E) of said inner combustion chamber (3).

8. Machine (1) according to claim 3), **characterized in that** said injection circuit (11) comprises a compensator (16) arranged downstream said volumetric pump (14).

9. Machine (1) according to claim 3), **characterized in that** said injection circuit (11) comprises an auxiliary return pipe (17) provided with valve means (18) which normally take an open position when said cooling fluid (L) is introduced under pressure into said expansion sector (E) of said inner combustion chamber (3) and a closed position when said cooling fluid (L) must remain in said service tank (12).

10. Machine (1) according to any of the previous claims, **characterized in that** said mechanical transmission means (9) comprise:
- at least one fixed solar toothed wheel (19), integral with said stator (2) and coaxial with said inner combustion chamber (3);
- a planetary support rotor (20) integral with said primary shaft (10) and suitable to be rotated around said linear axis (Y) coaxially with said solar toothed wheel (19);
- a plurality of satellite toothed wheels (21), pivoted on said planetary rotor (20) and engaging in said solar toothed wheel (19) from two by two opposite and symmetrically arranged parts with respect to said linear axis (Y);
- one or more interconnection hubs (23, 24), each associated and coaxial with one of said rotors (7a, 7b) and coupled with one or more transverse connecting levers (25, 26), coaxial with said rotors (7a, 7b) and interposed between said interconnection hubs (23, 24) and said satellite toothed wheels (21), each of said transverse levers (25, 26) having a pair of slotted radial cams (27, 28) suitable to slidably receive eccentric means (29) which connect said interconnection hubs (23, 24) with said satellite toothed wheels (21).

11. Machine (1) according to claim 10), **characterized in that** said eccentric means (29) project longitudinally and orthogonally from a side face (21a) of each of said satellite toothed wheels (21) on the primitive diameter of which they are positioned, at a point different from the center of said satellite toothed wheels (21).

12. Machine (1) according to claim 10) or 11), **characterized in that** said eccentric means (29) comprise a pair of projecting pins (30, 31), each of which is engaged in a respective one of said slotted radial cams ( 27, 28) inside which said projecting pins (29, 30) slide during the rotation of said interconnection hubs (23, 24) and of said rotors (7a, 7b) around said linear axis (Y).

13. Machine (1) according to any of claims 10) to 12), **characterized in that** the sliding of said orbiting pistons (6) in said inner combustion chamber (3) takes place simultaneously to the rotation of said rotors (7a, 7b), of said planetary rotor (20) and of said interconnection hubs (23, 24) around said linear axis (Y) and to the rotation of said satellite toothed wheels (21) around said fixed solar toothed wheel (19) and to the sliding of said eccentric means (29) in said slotted radial cams (27, 28).

## Patentansprüche

1. Eine rotierende Verbrennungsmaschine (1), die Folgendes umfasst:
- einen Stator (2), in dem eine innere Verbrennungskammer (3) definiert ist, die ein ringförmiges oder im Wesentlichen ringförmiges Profil hat und mindestens eine Ansaugöffnung (4) zum Einführen eines Betriebsfluids in die innere Kammer (3) und mindestens eine Auslassöffnung (5) zum Auslassen des Betriebsfluids aus der inneren Kammer (3) aufweist;
- eine Vielzahl von umlaufenden Kolben (6), die mit einem oder mehreren Rotoren (7a, 7b) koaxial zu der inneren Kammer (3) verbunden sind und in der inneren Kammer (3) in der Weise gleitend in Drehung versetzt werden, dass ein variables Paar benachbarter umlaufender Kolben (6) die innere Kammer (3) dynamisch und nacheinander in einen Ansaugsektor (A) des Betriebsfluids, einen Kompressionssektor (C) des Betriebsfluids, einen Expansionssektor (E) der verbrannten Gase und einen Auslasssektor (S) der verbrannten Gase unterteilt;
- Zündungsmittel (8) für die Verbrennung der Betriebsfluid, die zwischen dem Kompressionssektor (C) und dem Expansionssektor (E) der inneren Verbrennungskammer (3) angeordnet sind;
- mechanische Übertragungsmittel (9), die mit den Rotoren (7a, 7b) und mit einer Hauptwelle (10) verbunden sind, auf die sie die Bewegung übertragen, und die geeignet sind, durch das Betriebsfluid in Drehung um eine lineare Achse (Y) versetzt zu werden, so dass die umlaufenden Kolben (6) in der inneren Kammer (3) in Drehung gleiten, einer nach dem anderen, gleichzeitig mit der Drehung der mechanischen Übertragungsmittel (9) und der Rotoren (7a, 7b) um die lineare Achse (Y),
**dadurch gekennzeichnet, dass** sie eine Einspritzschaltung (11) umfasst, die mit dem Stator (2) derart zusammenwirkt, dass in den Expansionssektor (E) der inneren Verbrennungskammer (3) ein Kühlfluid (L) in zerstäubter oder pulverförmiger Form befördert wird, das in einem zur Einspritzschaltung (11) gehörenden Servicebehalter (12) enthalten ist, sobald die Verbrennung des Betriebsfluids durch die Zündungsmittel (8) erfolgt und während der Drehung der mechanischen Übertragungsmittel (9) und der Rotoren (7a, 7b) um die lineare Achse (Y).

2. Maschine (1) nach Anspruch 1), **dadurch gekennzeichnet, dass** die Einspritzschaltung (11) ein Hauptzuführungsrohr (13) umfasst, das mit dem oberen Teil (P) des Expansionssektors (E) der inneren Verbrennungskammer (3) verbunden ist.

3. Maschine (1) nach Anspruch 1) oder 2), **dadurch gekennzeichnet, dass** die Einspritzschaltung (11) mindestens eine volumetrische Pumpe (14) umfasst, die geeignet ist, das Kühlfluid (L) aus dem Servicebehalter (12) anzusaugen und es unter Druck in den Expansionssektor (E) der inneren Verbrennungskammer (3) einzuspritzen.

4. Maschine (1) nach einem der vorhergehenden Ansprüche, **dadurch gekennzeichnet, dass** die Einspritzschaltung (11) eine Sprühdüse umfasst, die dem Expansionssektor (E) der inneren Verbrennungskammer (3) zugewandt und geeignet ist, die Kühlfluid (L) zu zerstäuben oder zu versprühen.

5. Maschine (1) nach Anspruch 4) in Abhängigkeit von Anspruch 2), **dadurch gekennzeichnet, dass** die Sprühdüse an einem ersten Ende (13a) des Hauptzufuhrungsrohres (13) angeordnet ist, das dem Expansionssektor (E) der inneren Verbrennungskammer (3) zugewandt ist.

6. Maschine (1) nach Anspruch 3), **dadurch gekennzeichnet, dass** die Einspritzschaltung (11) ein Rückschlagventil (15) aufweist, das stromabwärts der volumetrischen Pumpe (14) angeordnet ist.

7. Maschine (1) nach Anspruch 6), wenn Anspruch 3) von Anspruch 2) abhängt, **dadurch gekennzeichnet, dass** das Rückschlagventil (15) an einem zweiten Ende (13b) des Hauptzufuhrungsrohres (13) angeordnet ist, das einem ersten Ende (13a) gegenüberliegt, das dem Expansionssektor (E) der inneren Verbrennungskammer (3) zugewandt ist.

8. Maschine (1) nach Anspruch 3), **dadurch gekennzeichnet, dass** die Einspritzschaltung (11) einen Kompensator (16) umfasst, der stromabwärts der volumetrischen Pumpe (14) angeordnet ist.

9. Maschine (1) nach Anspruch 3), **dadurch gekennzeichnet, dass** die Einspritzschaltung (11) einen Hilfsrücklaufrohr (17) umfasst, der mit Ventilmitteln (18) versehen ist, die normalerweise eine offene Position einnehmen, wenn das Kühlfluid (L) unter Druck in den Expansionssektor (E) der inneren Verbrennungskammer (3) eingeleitet wird, und eine geschlossene Position, wenn das Kühlfluid (L) in dem Servicebehalter (12) verbleiben muss.

10. Maschine (1) nach einem der vorhergehenden Ansprüche, **dadurch gekennzeichnet, dass** die mechanischen Übertragungsmittel (9) Folgendes umfassen:
- mindestens ein festes Sonnenzahnrad (19), das mit dem Stator (2) fest verbunden ist und koaxial zur inneren Verbrennungskammer (3) liegt;
- einen Planetenstützrotor (20), der vollständig mit der Hauptwelle (10) verbunden ist und sich koaxial mit dem Sonnenzahnrad (19) um die Linearachse (Y) drehen kann;
- eine Vielzahl von Satellitenzahnrädern (21), die auf dem Planetenrotor (20) drehbar gelagert sind und von zwei mal zwei gegenüberliegenden und symmetrisch zu der linearen Achse (Y) angeordneten Teilen in das Sonnenzahnrad (19) eingreifen;
- eine oder mehrere Verbindungsnaben (23, 24), die jeweils mit einem der Rotoren (7a, 7b) verbunden und koaxial zu diesem sind und mit einem oder mehreren Querverbindungshebeln (25, 26) gekoppelt sind, die koaxial zu den Rotoren (7a, 7b) sind und zwischen den Verbindungsnaben (23, 24) und den Satellitenzahnrädern (21) angeordnet sind, wobei jeder der Querhebel (25, 26) ein Paar geschlitzter Radialnocken (27, 28) aufweist, die geeignet sind, Exzentermittel (29) gleitend aufzunehmen, die die Verbindungsnaben (23, 24) mit den Satellitenzahnrädern (21) verbinden.

11. Maschine (1) nach Anspruch 10), **dadurch gekennzeichnet, dass** die Exzentermittel (29) in Längsrichtung und orthogonal von einer Seitenfläche (21a) jedes der Satellitenzahnräder (21), auf deren primitivem Durchmesser sie positioniert sind, an einem von der Mitte der Satellitenzahnräder (21) verschiedenen Punkt vorstehen.

12. Maschine (1) nach Anspruch 10) oder 11), **dadurch gekennzeichnet, dass** die Exzentermittel (29) ein Paar von vorstehenden Stiften (30, 31) umfassen, von denen jeder in einen entsprechenden der geschlitzten Radialnocken (27, 28) eingreift, in denen die vorstehenden Stifte (29, 30) während der Drehung der Verbindungsnaben (23, 24) und der Rotoren (7a, 7b) um die lineare Achse (Y) gleiten.

13. Maschine (1) nach einem der Ansprüche 10) bis 12), **dadurch gekennzeichnet, dass** das Gleiten der umlaufenden Kolben (6) in der inneren Verbrennungskammer (3) gleichzeitig mit der Drehung der Rotoren (7a, 7b), des Planetenrotors (20) und der Verbindungsnaben (23, 24) um die lineare Achse (Y) und der Drehung der Satellitenzahnräder (21) um das feste Sonnenzahnrad (19) und dem Gleiten der Exzentermittel (29) in den geschlitzten Radialnocken (27, 28) erfolgt.

## Revendications

1. Machine rotative à combustion (1) comprenant :
- un stator (2) dans lequel est définie une chambre de combustion intérieure (3) ayant un profil annulaire ou sensiblement toroïdal et présentant au moins un orifice d'aspiration (4) pour l'introduction d'un fluide de fonctionnement dans ladite chambre intérieure (3) et au moins un orifice de décharge (5) pour l'évacuation dudit fluide de fonctionnement hors de ladite chambre intérieure (3) ;
- une pluralité de pistons orbitaux (6), reliés à un ou plusieurs rotors (7a, 7b) coaxiaux à ladite chambre intérieure (3) et rendus coulissant en rotation dans ladite chambre intérieure (3) de telle manière qu'une paire variable de pistons orbitaux adjacents (6) divise dynamiquement et consécutivement ladite chambre intérieure (3) en un secteur d'aspiration (A) dudit fluide de fonctionnement, un secteur de compression (C) dudit fluide de fonctionnement, un secteur d'expansion (E) des gaz brûlés et un secteur d'évacuation (S) desdits gaz brûlés ;
- des moyens d'allumage (8) de la combustion dudit fluide de fonctionnement, interposés entre ledit secteur de compression (C) et ledit secteur d'expansion (E) de ladite chambre de combustion intérieure (3) ;
- des moyens de transmission mécanique (9), reliés auxdits rotors (7a, 7b) et à un arbre primaire (10) auquel ils transmettent le mouvement, aptes à être mis par ledit fluide de fonctionnement en rotation autour d'un axe linéaire (Y), de telle manière que lesdits pistons orbitaux (6) coulissent en rotation à l'intérieur de ladite chambre intérieure (3), l'un à la suite de l'autre, simultanément à la rotation desdits moyens de transmission mécanique (9) et desdits rotors (7a, 7b) autour dudit axe linéaire (Y),
**caractérisée en ce qu'**elle comprend un circuit d'injection (11), coopérant avec ledit stator (2) de manière à acheminer à l'intérieur dudit secteur d'expansion (E) de ladite chambre de combustion intérieure (3) un fluide de refroidissement (L) sous forme atomisée ou de poudre, contenu dans un réservoir de service (12) appartenant audit circuit d'injection (11), une fois que ladite combustion dudit fluide de fonctionnement par lesdits moyens d'allumage (8) a eu lieu et pendant ladite rotation desdits moyens de transmission mécanique (9) et desdits rotors (7a, 7b) autour dudit axe linéaire (Y).

2. Machine (1) selon la revendication 1), **caractérisée en ce que** ledit circuit d'injection (11) comprend un tuyau de refoulement principal (13) relié à la partie supérieure (P) dudit secteur d'expansion (E) de ladite chambre de combustion intérieure (3).

3. Machine (1) selon la revendication 1) ou 2), **caractérisée en ce que** ledit circuit d'injection (11) comprend au moins une pompe volumétrique (14) apte à aspirer ledit fluide de refroidissement (L) à partir dudit réservoir de service (12) et à l'injecter sous pression dans ledit secteur d'expansion (E) de ladite chambre de combustion intérieure (3).

4. Machine (1) selon l'une quelconque des revendications précédentes, **caractérisée en ce que** ledit circuit d'injection (11) comprend une buse de pulvérisation orientée vers ledit secteur d'expansion (E) de ladite chambre de combustion interne (3) et apte à nébuliser ou à pulvériser ledit fluide de refroidissement (L).

5. Machine (1) selon la revendication 4) lorsqu'elle dépend de la revendication 2), **caractérisée en ce que** ladite buse de pulvérisation est disposée à une première extrémité (13a) dudit tuyau de refoulement principal (13), celle-ci étant orientée vers ledit secteur d'expansion (E) de ladite chambre de combustion intérieure (3).

6. Machine (1) selon la revendication 3), **caractérisée en ce que** ledit circuit d'injection (11) comporte un clapet anti-retour (15) disposé en aval de ladite pompe volumétrique (14).

7. Machine (1) selon la revendication 6) lorsque la revendication 3) dépend de la revendication 2), **caractérisée en ce que** ledit clapet anti-retour (15) est disposé à une seconde extrémité (13b) dudit tuyau de refoulement principal (13), à l'opposé d'une première extrémité (13a) orientée vers ledit secteur d'expansion (E) de ladite chambre de combustion intérieure (3).

8. Machine (1) selon la revendication 3), **caractérisée en ce que** ledit circuit d'injection (11) comprend un compensateur (16) disposé en aval de ladite pompe volumétrique (14).

9. Machine (1) selon la revendication 3), **caractérisée en ce que** ledit circuit d'injection (11) comprend un tuyau de retour auxiliaire (17) pourvu de moyens de soupape (18) qui assument normalement une position ouverte lorsque ledit fluide de refroidissement (L) est introduit sous pression dans ledit secteur d'expansion (E) de ladite chambre de combustion intérieure (3) et une position fermée lorsque ledit fluide de refroidissement (L) doit rester dans ledit réservoir de service (12).

10. Machine (1) selon l'une quelconque des revendications précédentes, **caractérisée en ce que** lesdits moyens de transmission mécanique (9) comprennent :
- au moins une roue dentée solaire fixe (19), solidaire dudit stator (2) et coaxiale avec ladite chambre de combustion intérieure (3) ;
- un rotor de support planétaire (20) solidaire dudit arbre primaire (10) et apte à être mis en rotation autour dudit axe linéaire (Y) de manière coaxiale à ladite roue solaire dentée (19) ;
- une pluralité de roues dentées satellites (21), pivotant sur ledit rotor planétaire (20) et s'engageant dans ladite roue dentée solaire (19) à partir de parties opposées deux à deux et disposées symétriquement par rapport audit axe linéaire (Y) ;
- un ou plusieurs moyeux d'interconnexion (23, 24), chacun associé et coaxial à l'un desdits rotors (7a, 7b) et couplé à un ou plusieurs leviers de connexion transversaux (25, 26), coaxiaux auxdits rotors (7a, 7b) et interposés entre lesdits moyeux d'interconnexion (23, 24) et lesdites roues dentées satellites (21), chacun desdits leviers transversaux (25, 26) comportant une paire de cames radiales fendues (27, 28) aptes à recevoir de manière coulissante des moyens excentriques (29) qui relient lesdits moyeux d'interconnexion (23, 24) auxdites roues dentées satellites (21).

11. Machine (1) selon la revendication 10), **caractérisée en ce que** lesdits moyens excentriques (29) font saillie longitudinalement et orthogonalement à partir d'une face latérale (21a) de chacune desdites roues dentées satellites (21) sur le diamètre primitif desquelles ils sont positionnés, en un point différent du centre desdites roues dentées satellites (21).

12. Machine (1) selon la revendication 10) ou 11), **caractérisée en ce que** lesdits moyens excentriques (29) comprennent une paire de broches en saillie (30, 31), chacune desquelles est engagée dans l'une respective desdites cames radiales fendues (27, 28) à l'intérieur desquelles lesdites broches en saillie (29, 30) coulissent durant la rotation desdits moyeux d'interconnexion (23, 24) et desdits rotors (7a, 7b) autour dudit axe linéaire (Y).

13. Machine (1) selon l'une quelconque des revendications 10) à 12), **caractérisée en ce que** le coulissement desdits pistons orbitaux (6) dans ladite chambre de combustion intérieure (3) a lieu simultanément à la rotation desdits rotors (7a, 7b), dudit rotor planétaire (20) et desdits moyeux d'interconnexion (23, 24) autour dudit axe linéaire (Y) et à la rotation desdites roues dentées satellites (21) autour de ladite roue dentée solaire fixe (19) et au coulissement desdits moyens excentriques (29) dans lesdites cames radiales fendues (27, 28).
